# EUROPÄISCHE PATENTSCHRIFT

(11) **EP 3 988 801 B1**
(45) Veröffentlichungstag und Bekanntmachung des Hinweises auf die Patenterteilung: **16.04.2025**
(21) Anmeldenummer: 21202811.2
(22) Anmeldetag: 15.10.2021
(51) Int. Cl.: F15B 19/00, F15B 21/08, F15B 11/028, F15B 11/042, F15B 11/044

(54) **VERFAHREN ZUM BETREIBEN EINES HYDRAULISCHEN ANTRIEBS**
METHOD FOR OPERATING A HYDRAULIC DRIVE
PROCÉDÉ DE FONCTIONNEMENT D'UN ENTRAÎNEMENT HYDRAULIQUE

(30) Priorität: 21.10.2020 DE 102020213262
(43) Veröffentlichungstag der Anmeldung: 27.04.2022
(73) Patentinhaber: Robert Bosch GmbH, 70442 Stuttgart (DE)
(72) Erfinder: Sendelbach, Thomas, 97816 Lohr (DE); Freigang, Henning, 97816 Lohr Am Main (DE); Wahler, Matthias, 97828 Altfeld (DE)

(56) Entgegenhaltungen:
- EP-A2- 0 247 335
- EP-A2- 2 192 309
- DE-A1- 102011 120 767
- DE-A1- 102016 223 099
- DE-A1- 102017 213 650

## Beschreibung

Die vorliegende Erfindung betrifft ein Verfahren zum Betreiben eines hydraulischen Antriebs, der einen hydraulischen Verbraucher mit einem positionierbaren Kolben in einem Zylinder umfasst, sowie eine Recheneinheit und ein Computerprogramm zu dessen Durchführung.

### Hintergrund der Erfindung

Bei einer elektrohydraulischen Achse handelt es sich um einen hydraulischen Antrieb mit einer Pumpe (die in der Regel mittels eines elektrischen Motors bzw. Antriebs betrieben wird) und einem hydraulischen Zylinder, bei dem eine elektrische bzw. elektronische Regelung beispielsweise der Position des Zylinderkolbens möglich ist. Solche elektrohydraulische Achsen werden beispielsweise für sog. Tiefziehpressen, Spritzgießmaschinen oder auch bei anderen Umformtechnikmaschinen verwendet, ebenso wie beispielsweise zum Bewegen schwerer Lasten oder Maschinenteile.

Meist sind bei solchen elektrohydraulischen Achsen ablösende Kraft-Positions-Regelungen vorgesehen, d.h. es findet beispielsweise je nach Betriebspunkt eine Kraftregelung oder eine Positionsregelung statt. Anstelle einer Kraftregelung kann auch eine Druckregelung vorgesehen sein, welche aufgrund des Zusammenhangs zwischen Kraft und Druck über die Angriffsfläche des Drucks, beispielsweise in einem hydraulischen Zylinder, äquivalent sind.

Bei solchen Regelungen kann beispielsweise ein Ventil zur Volumenstromänderung der Hydraulikflüssigkeit in den Zylinder oder aus dem Zylinder verwendet werden. Auch kann eine Regelung der Drehzahl des der Pumpe (bzw. des antreibenden Motors) erfolgen. Die Pumpe kann insbesondere als Konstantpumpe mit festem Fördervolumen oder als Verstellpumpe mit variablem Fördervolumen pro Arbeitsspiel ausgebildet sein. Aus der EP 1 930 604 B1 ist z.B. ein Verfahren bekannt, bei dem eine Verstellpumpe mit konstanter Drehzahl auf einen Förderstrom oder Druck geregelt wird. In Abhängigkeit davon kann ein Bremsventil angesteuert werden. Auch die DE 10 2016 223 099 A1 beschäftigt sich mit dem Betrieb hydraulischer Antriebe.

### Offenbarung der Erfindung

Erfindungsgemäß werden ein Verfahren zum Betreiben eines hydraulischen Antriebs sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit einem Verfahren zum Betreiben eines hydraulischen Antriebs, der einen hydraulischen Verbraucher mit einem positionierbaren Kolben in einem Zylinder umfasst. Wie eingangs erwähnt, können zur Regelung einer Position des Kolbens eine Drehzahl der Pumpe als Stellgröße oder eine Stellung eines Ventils zur Volumenstromänderung einer Hydraulikflüssigkeit in den Zylinder oder aus dem Zylinder verwendet werden. Wie sich gezeigt hat, gibt es allerdings in beiden Varianten gewisse Nachteile. Im Falle der Drehzahl als Stellgröße sind dies z.B. unzureichende Steifigkeit des hydraulischen Antriebs, eine ungenaue Positionierungsdynamik sowie eine variierende Resonanzfrequenz. Im Fall des Ventils sind dies z.B. Leistungsverluste im Ventil aufgrund des Druckabfalls im Ventil, eine nichtlineare Charakteristik sowie ebenfalls eine variierende Resonanzfrequenz.

Vor diesem Hintergrund wird vorgeschlagen, dass der hydraulische Verbraucher, z.B. eine elektrohydraulische Achse, an einem Anschluss (z.B. auf der A-Seite) über eine drehzahlvariable Pumpe und an einem anderen Anschluss (z.B. auf der B-Seite) über ein Proportionalventil mit einem Tank verbunden wird bzw. ist. Im Falle eines Hydraulikzylinders als hydraulischer Verbraucher weist dieser zwei Kammern auf, die durch den Kolben getrennt sind. Jeder Kammer ist dabei einer der Anschlüsse (A-Seite, B-Seite) zugeordnet. Es wird dann eine Position des Kolbens unter Verwendung bzw. im Rahmen einer modellbasierten Regelung geregelt, in der eine Drehzahl der Pumpe als Stellgröße verwendet wird und in der eine Stellung des Proportionalventils vorgegeben wird. Hierbei wird ein inverses Streckenmodell (oder inverses Systemmodell) des hydraulischen Antriebs verwendet, um unter Verwendung des Proportionalventils einen Sollwert für eine (bremsende) Kraft auf den Kolben einzustellen, insbesondere einzuregeln. Bei einem inversen Modell sind Ein- und Ausgänge vertauscht; beispielsweise können Volumenstrom und/oder Druck als Eingänge eines inversen Ventilmodells zu einer Ventilschieberposition als Ausgang führen. Das Proportionalventil wird dabei insbesondere in einem geschlossenen Regelkreis eingesetzt, d.h. auch die Einstellung des Schiebers im Ventil kann im geschlossenen (unterlagerten) Regelkreis mit Rückführung eines Istwerts der Position erfolgen. Damit kann einerseits eine höhere Steifigkeit des hydraulischen Antriebs und andererseits auch eine besonders gute Energieeffizienz erreicht werden.

Mit einer solchen Positionsregelung kann besonders gut und schnell auf verschiedene Phasen bzw. Übergänge zwischen verschiedenen Phasen bei z.B. dem Betrieb eines Gießzylinders reagiert werden. Zudem ist eine solche Regelung besonders einfach und schnell parametrierbar.

Die Größen, für die bei dieser Regelung die Istwerte benötigt werden, sind dabei insbesondere die Position des Kolbens sowie die beiden Drücke auf Seiten der zwei Anschlüsse. Diese können z.B. mittels geeigneter Sensoren erfasst werden. Im Rahmen der modellbasierten Regelung können dann aus der Position des Kolbens auch dessen Geschwindigkeit und Beschleunigung ermittelt werden. Daraus können dann wiederum gewünschte Durchflussmengen (Volumenströme) auf den beiden Seiten - also einmal auf Seiten der Pumpe (dort dann auch als Förderstrom zu bezeichnen) und einmal auf Seiten des Proportionalventils - ermittelt werden, die dann entsprechend vorgegeben werden. In diesem Zusammenhang sei auch erwähnt, dass bei einer modellbasierten Regelung anhand eines Modells des Systems (hier wird, wie erwähnt, insbesondere ein inverses Streckenmodell verwendet) eine Trajektorie, d.h. Verlauf von Größen (in diesem Fall der Position) vorausberechnet werden kann. Regelgrößen werden bei der modellbasierten Regelung auch als Zustandsvariablen bezeichnet und es können Zustandsbeschränkungen berücksichtigt werden. Für eine nähere Beschreibung des Modells sei auch auf die Figurenbeschreibung verwiesen.

Erfindungsgemäß wird daher zum Erreichen (oder Realisieren) des Sollwerts für die Kraft auf den Kolben - und damit die gewünschte Beschleunigung bzw. Bremswirkung - über eine Planung von Solldrücken im hydraulischen Antrieb und daraus resultierenden Stellungen des Proportionalventils auf einen Sollverlauf der Stellung des Proportionalventils geschlossen.

Bevorzugt wird bei einer Vorgabe (z.B. im Rahmen einer unterlagerten Regelung) der Stellung des Proportionalventils eine Vorsteuerung vorgenommen. Zweckmäßigerweise werden dabei ein modellbasierter Drucksollwert als Eingang und/oder eine Dynamik des Proportionalventils berücksichtigt. Ein modellbasierter Wert für die Durchflussmenge des Proportionalventils kann dabei die Ventildynamik erhöhen. Effektiv kann so z.B. das Ventil übersteuert werden, um die reale Durchflussmenge möglichste nahe an den modellbasierten Wert zu bringen. Während bei zugrundeliegenden Gleichungen typischerweise von einem unendlich schnellen Stellglied beim Ventil ausgegangen wird, kann eine solche Vorsteuerung diese Fehler reduzieren. Ein Modell, das für das Proportionalventil verwendet wird, kann dabei insbesondere einen Dynamikteil umfassen, der ggf. vereinfacht eine Schieberposition der Hauptstufe bzw. des Hauptventils sowie eine Limitierung des Pilotventils (hierbei handelt es sich um eine Steuerkomponente für das Hauptventil) bei festgelegtem Systemdruck beschreibt. Beispielsweise kann ein System 2. Ordnung (z.B. PT2-Verhalten) mit Zustandsbeschränkung angenommen werden. Ebenso kann es eine Öffnungsgleichung umfassen, die abhängig von den anliegenden Drücken an der Hauptstufe und der Geometriekennlinie den Volumenstrom beschreibt. Der Ausgang der Vorsteuerung ist ein Sollwert für die Ventilposition.

Vorzugsweise wird bei der Regelung der Position des Kolbens eine Vorsteuerung vorgenommen. Zweckmäßigerweise wird hierbei ein Zusammenhang zwischen einer Durchflussmenge (Volumenstrom) des Zylinders und einer die Bewegung des Kolbens kennzeichnenden Zustandsvariablen, insbesondere einer zeitlichen Ableitung der Position (also z.B. Geschwindigkeit, Beschleunigung und/oder Ruck), berücksichtigt. Für die Vorsteuerungen bei Kolben und Proportionalventil können also insbesondere verschiedene bzw. separate Zustands- und/oder Stellbeschränkungen berücksichtigt werden. Ein Ausgang der Vorsteuerung ist dann bevorzugt je ein Sollwert für einen Volumenstrom beider Anschlüsse (Kolbenseiten).

In dem verwendeten (inversen) Strecken- oder Systemmodell werden zur Realisierung der insbesondere flachheitsbasierten Vorsteuerung bevorzugt stetig differenzierbare Trajektorien für den flachen Ausgang und dessen Zeitableitungen benötigt. Zur Erzeugung einer Stellgrö-ßentrajektorie in Echtzeit können z.B. ein erweiterter Tiefpassfilter-Algorithmus verwendet und die nichtlineare (flache) Dynamik sowie Beschränkungen des flachen Zustands berücksichtigt werden. Ein solches Verfahren mit Echtzeit-Trajektorienplanung mit Berücksichtigung von Zustands- und Stellgrößenbeschränkungen wird z.B. in der DE 10 2018 211 738 A1 beschrieben und dort am Beispiel einer Axialkolbenpumpe demonstriert. Für nähere Erläuterungen sei daher auf die dortige Beschreibung verwiesen.

Zusammenfassend gibt es somit die nachfolgenden besonderen Vorteile bei dem vorgeschlagenen Regelkonzept.

Es kann für die Regelung des Zylinders (dies betrifft die Position des Kolbens) und des Proportionalventils jeweils eine Vorsteuerung verwendet werden, die auch jeweils unterschiedliche Zustands- und Stellbeschränkungen berücksichtigt. Um den Beschleunigungssollwert zu realisieren, kann über eine erweiterte Planung der Solldrücke und über die daraus resultierenden Ventilöffnungen auf einen Sollventilöffnungsverlauf geschlossen werden. Durch Messen eines nicht sensitiven Ist-Drucks auf der A-Seite (bzw. auf Seiten der Pumpe, nicht sensitiv dann, wenn er nicht direkt gesteuert wird, sondern an einem Speicher hängt und die B-Seite nur einen Eingriffspunkt aufweist) kann das Modell online um die gemachte Vereinfachung kompensiert werden. Durch die Messung oder Vorgabe (Solldruck bei einer Druckregelung dieser Kammer) eines Kammerdrucks kann eindeutig der andere Kammerdruck abgeleitet werden. Wenn nicht direkt die Druckaufbaugleichung, die gesteuert wird, um den flachen Ausgang vorzugeben, gemessen und rückgeführt wird, kann die Flachheit des Gesamtsystems im Rahmen der Totzeiten und Messwertverarbeitungszeit als flach approximiert werden. Hierbei kommt man von einer vieldeutigen auf eine exakte Lösung für die Position des Zylinders. Das vorgeschlagene Verfahren ist zudem online- bzw. echtzeitfähig.

Ein weiterer Vorteil ist, dass das Ventil deutlich dynamischer als bisher gesteuert werden kann, nämlich z.B. anstelle einer Reaktionszeit von etwa 14 ms nur noch etwa 7 ms im Kleinsignalbereich. Ein nicht flaches System wird über das vorgeschlagene Verfahren bzw. die darin gemachten Anpassung trotzdem durch eine Vorsteuerung steuerbar.

Ergänzend können im Rahmen einer Überwachung anhand des Modells des hydraulischen Antriebs z.B. auch bestimmte Werte von Größen mit entsprechenden Messwerten verglichen werden, was als ein "Condition Monitoring" vorgenommen werden kann. Zudem können die Effizient und Präzision auch mittels einer variablen Getriebeübersetzung gesteigert werden.

Eine erfindungsgemäße Recheneinheit, z.B. ein Steuergerät einer hydraulischen Achse, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung
- Figur 1: zeigt schematisch einen hydraulischen Antrieb, die sich zur Durchführung eines erfindungsgemäßen Verfahrens eignet
- Figur 2: zeigt schematisch einen Ablauf eines erfindungsgemäßen Verfahrens in einer bevorzugten Ausführungsform.

### Detaillierte Beschreibung der Zeichnung

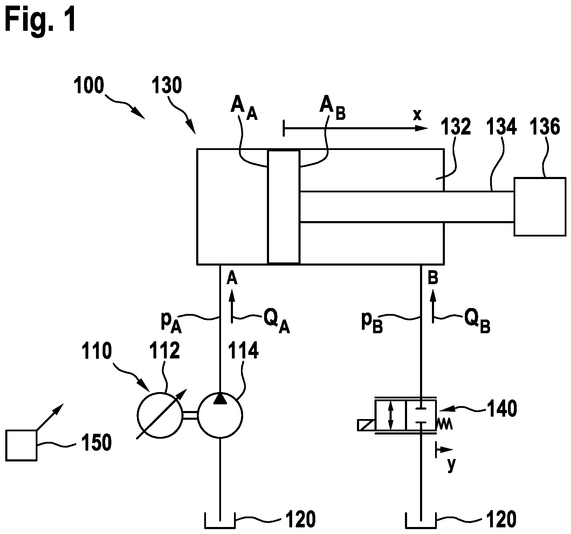

**In** **Figur 1** ist schematisch ein hydraulischer Antrieb 100 dargestellt, bei dem ein erfindungsgemäßes Verfahren durchführbar ist, wie es auch nachfolgend erläutert werden soll. Der hydraulische Antrieb 100 weist vorliegend eine drehzahlvariable Pumpe 110, umfassend einen (drehzahlvariablen) elektrischen Motor bzw. Antrieb 112 und eine daran gekoppelte Fördereinheit 114, auf. Bei der Pumpe 110 handelt es sich z.B. um eine als Konstantpumpe ausgeführte Axialkolbenpumpe mit festem Fördervolumen pro Arbeitsspiel.

Weiterhin ist die Pumpe 110 mit einem hydraulischen Verbraucher 130 verbunden, bei dem es sich vorliegend um einen Zylinder 132 mit einem positionierbaren Kolben 134 handelt. Eine Position des Kolbens bzw. eines Referenzpunkts dort ist mit x bezeichnet. Mittels des Kolbens kann z.B. eine Last 136 bewegt werden. Der Zylinder 132 ist an einem Anschluss A über die Pumpe 110 und an einem Anschluss B über ein Proportionalventil 140 mit einem Tank 120 für Hydraulikfluid verbunden. Eine Stellung eines Schiebers des Proportionalventils 140 ist mit y bezeichnet.

In dem Zylinder 132 bzw. am Kolben 134 sind die A-seitige Kolbenfläche mit A_{A} und die ringförmige, B-seitige Kolbenfläche mit A_{B} bezeichnet. Ein Druck auf der A-Seite beträgt p_{A} und ein Druck auf der B-Seite p_{B}. Ein Förderstrom bzw. eine Durchflussmenge in den bzw. aus dem Zylinder 132 sind auf der A-Seite mit *Q_{A}* und auf der B-Seite mit *Q_{B}* bezeichnet.

Über eine als Steuereinheit ausgebildete Recheneinheit 150 kann der elektrische Motor 112, ggf. über weitere Komponenten wie Inverter oder Frequenzumrichter, angesteuert werden, ebenso das Proportionalventil 140. Der hydraulische Antrieb 100 kann somit als elektrohydraulische Achse verwendet werden. Es versteht sich, dass auch weitere Pumpen und/oder Ventile an geeigneten Stellen vorhanden sein können, dies ist jedoch nicht zwingend nötig.

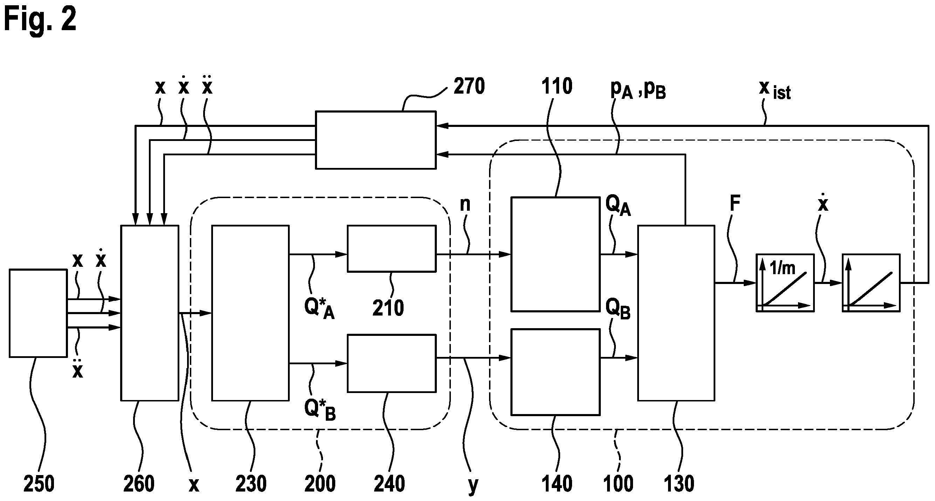

In Figur 2 ist schematisch ein Ablauf eines erfindungsgemäßen Verfahrens in einer bevorzugten Ausführungsform dargestellt. Zur Regelung der Position x des Kolbens wird ein Zustandsregler 260 verwendet, der z.B. auf der Recheneinheit 150 ausgeführt werden kann und der sich eines inversen Modells bzw. Streckenmodells 200 des hydraulischen Antriebs 100 bedient. In dem Modell 200 wird insbesondere nach den betreffenden Komponenten des hydraulischen Antriebs unterschieden, d.h. es gibt ein Modell 230 für den hydraulischen Verbraucher 130, ein Modell 210 für die Pumpe 110 sowie ein Modell 240 für das Proportionalventil 140. Zudem ist ein Zustandsbeobachter 270 vorgesehen, ebenso ein Einheit 250 (ein sog. Interpolator) zur Vorgabe von Sollwerten für Zustandsgrößen. Mittels eines Interpolators ist es möglich, Trajektorien und deren Ableitungen zu generieren, also eine weitere Methode, neben bzw. Tiefpassfilter n-ter Ordnung.

Mittels der Einheit 250 können Sollwerte für Zustandsgrößen (eine Solltrajektorie) vorgegeben werden, die hier insbesondere die Position x des Kolbens, aber auch deren zeitliche Ableitungen *ẋ* (Geschwindigkeit) und *ẍ* (Beschleunigung) umfasst (die Solltrajektorie sollte dabei n-mal stetig differenzierbar sein). Diese werden an den Zustandsregler 260 übergeben, der selbst auch Istwerte dieser Zustandsgrößen vom Zustandsbeobachter 270 erhält. Dieser wiederum erhält als Eingangsgrößen den Istwert *xᵢₛₜ* der Position *x* sowie Istwerte der Drücke *p_{A}* und *p_{B}* und berechnet daraus Istwerte für *ẋ* (Geschwindigkeit) und *ẍ* (Beschleunigung). Unter Verwendung des Modells 200 werden aus dem Sollwert für die Position x dann Werte für eine Drehzahl *n* der Pumpe 110 sowie eine Stellung y des Proportionalventils 140 ermittelt, die eingestellt bzw. eingeregelt werden.

In dem hydraulischen Antrieb 100 werden die Drehzahl *n* und die Stellung y dann in die Fördermenge *Q_{A}* bzw. die Durchflussmenge *Q_{B}* umgesetzt, was in einer Kraft *F* auf den Kolben bzw. die Last 126 resultiert. Unter Berücksichtigung der Masse *m* der bewegten Masse (also Last 126 und Kolben 134) ergeben sich daraus auch die Geschwindigkeit und die Position.

Im Rahmen der Ermittlung dieser Werte für die Drehzahl *n* und die Stellung y mittels des Modells 200 werden dabei auch modellbasierte Förderströme bzw. Durchflussmengen *Q_{A}** und *Q_{B}** ermittelt. Bei diesen modellbasierten Berechnungen kann sich geeigneter (inverser) nicht linearer Zustandsraumdarstellungen bedient werden, die den hydraulischen Antrieb beschreiben und eine Linearisierung entlang der Solltrajektorie ermöglichen.

Eine Beschleunigung der Solltrajektorie (die also die Kraft auf den Kolben angibt) kann dabei z.B. in Sollwerte *p_{A,soll}* und *p_{b,soll}* für die Drücke umgerechnet werden. Dabei kann z.B. einer der beiden Drücke, z.B. *p_{b,soll},* vorgegeben werden, der sich dann statisch einstellen wird. Somit kann auf das Druckniveau und die Steifigkeit des hydraulischen Verbrauchers Einfluss genommen werden. Die Steifigkeit kann mit einer Vorsteuerung zwar in der Regel nicht direkt beeinflusst werden. Jedoch kann über Polvorgabe/Impedanz bei der Regelung im Zustandsreglerteil die Zielsteifigkeit durch den Regler eingestellt werden

Die Durchflussmenge *Q_{B},* die eine Funktion der Stellung y ist, d.h. es gilt *Q_{B} = Q_{B}*(*y*)*,* kann dabei durch die Vorgabe einer Stellung y des Proportionalventils erreicht werden. Die Drehzahl wiederum hat Einfluss auf den Förderstrom *Q_{A}*. Dabei ist *Q_{B}* eine Funktion der Zustände des Trajektorienplanungsfilters, die dann in die Vorsteuerfunktion eingesetzt werden. Für die Annahme, dass sich *p_{A}* in diesem Fall konstant verhält oder messbar ist, lässt sich die Zielventilöffnung (Stellung y) über der Zeit berechnen.

## Patentansprüche

1. Verfahren zum Betreiben eines hydraulischen Antriebs (100), der einen hydraulischen Verbraucher (130) mit einem positionierbaren Kolben (134) in einem Zylinder (132) aufweist, der an einem Anschluss (A) über eine drehzahlvariable Pumpe (110) und an einem anderen Anschluss (B) über ein Proportionalventil (140) mit einem Tank (120) verbunden ist,
wobei eine Position (x) des Kolbens (134) unter Verwendung einer modellbasierten Regelung geregelt wird, in der eine Drehzahl (n) der Pumpe (110) als Stellgröße verwendet wird und in der eine Stellung (y) des Proportionalventils (140) vorgegeben wird,
wobei ein inverses Streckenmodell (200) des hydraulischen Antriebs (100) verwendet wird, um unter Verwendung des Proportionalventils (140) einen Sollwert für eine Kraft auf den Kolben einzustellen, und
**dadurch gekennzeichnet, dass**
zum Erreichen des Sollwerts für die Kraft auf den Kolben (134) über eine Planung von Solldrücken im hydraulischen Antrieb (100) und daraus resultierenden Stellungen (y) des Proportionalventils (140) auf einen Sollverlauf der Stellung des Proportionalventils (140) geschlossen wird.

2. Verfahren nach Anspruch 1, wobei das inverses Streckenmodell (200) des hydraulischen Antriebs (100) verwendet wird, um unter Verwendung des Proportionalventils (140) den Sollwert für die Kraft auf den Kolben einzuregeln.

3. Verfahren nach einem der vorstehenden Ansprüche, wobei bei der Vorgabe, insbesondere im Rahmen einer unterlagerten Regelung, der Stellung (y) des Proportionalventils (140) eine Vorsteuerung vorgenommen wird.

4. Verfahren nach Anspruch 3, wobei in der Vorsteuerung für das Proportionalventil (140) ein modellbasierter Drucksollwert als Eingang und/oder eine Dynamik des Proportionalventils berücksichtigt werden.

5. Verfahren nach einem der vorstehenden Ansprüche, wobei bei der Regelung der Position (x) des Kolbens (134) eine Vorsteuerung vorgenommen wird.

6. Verfahren nach Anspruch 5, wobei in der Vorsteuerung für die Position (x) des Kolbens (134) ein Zusammenhang zwischen einer Durchflussmenge des Zylinders und einer die Bewegung des Kolbens kennzeichnende Zustandsvariable, insbesondere einer zeitlichen Ableitung der Position, berücksichtigt wird.

7. Verfahren nach einem der vorstehenden Ansprüche, wobei im Rahmen einer Überwachung anhand eines Modells des hydraulischen Antriebs (100) bestimmte Werte von Grö-βen mit entsprechenden Messwerten verglichen werden.

8. Verfahren nach einem der vorstehenden Ansprüche, wobei als drehzahlvariable Pumpe (110) eine Konstantpumpe oder eine Verstellpumpe verwendet wird.

9. Verfahren nach einem der vorstehenden Ansprüche, wobei der hydraulische Antrieb (100) für eine elektrohydraulische Achse verwendet wird.

10. Recheneinheit (150), die dazu eingerichtet ist, ein Verfahren nach einem der vorstehenden Ansprüche durchzuführen.

11. Computerprogramm, das eine Recheneinheit (150) gemäß Anspruch 10 veranlasst, ein Verfahren nach einem der Ansprüche 1 bis 9 durchzuführen, wenn es auf der Recheneinheit (150) ausgeführt wird.

12. Maschinenlesbares Speichermedium mit einem darauf gespeicherten Computerprogramm nach Anspruch 11.

## Claims

1. Method for operating a hydraulic drive (100) which has a hydraulic consumer (130) with a positionable piston (134) in a cylinder (132) which is connected to a tank (120) at one connection (A) via a pump (110) of variable rotational speed and at another connection (B) via a proportional valve (140),
wherein a position (x) of the piston (134) is controlled using model-based control in which a rotational speed (n) of the pump (110) is used as a manipulated variable and in which a position (y) of the proportional valve (140) is preset,
wherein an inverse system model (200) of the hydraulic drive (100) is used in order to set a setpoint value for a force on the piston using the proportional valve (140), and
**characterized in that**,
in order to achieve the setpoint value for the force on the piston (134), a setpoint profile of the position of the proportional valve (140) is inferred by means of planning setpoint pressures in the hydraulic drive (100) and resulting positions (y) of the proportional valve (140).

2. Method according to Claim 1, wherein the inverse system model (200) of the hydraulic drive (100) is used in order to adjust the setpoint value for the force on the piston using the proportional valve (140).

3. Method according to either of the preceding claims, wherein a pilot control operation is performed during presetting, in particular within the context of subordinate control, of the position (y) of the proportional valve (140).

4. Method according to Claim 3, wherein a model-based pressure setpoint value as input and/or the dynamics of the proportional valve are taken into consideration in the pilot control operation for the proportional valve (140).

5. Method according to any of the preceding claims, wherein a pilot control operation is performed during control of the position (x) of the piston (134).

6. Method according to Claim 5, wherein a relationship between a through-flow rate of the cylinder and a state variable characterizing the movement of the piston, in particular a time derivative of the position, is taken into consideration in the pilot control operation for the position (x) of the piston (134).

7. Method according to any of the preceding claims, wherein values of variables determined in the context of monitoring on the basis of a model of the hydraulic drive (100) are compared with corresponding measured values.

8. Method according to any of the preceding claims, wherein a constant displacement pump or a variable displacement pump is used as the pump (110) of variable rotational speed.

9. Method according to any of the preceding claims, wherein the hydraulic drive (100) is used for an electrohydraulic axle.

10. Computing unit (150) which is designed to carry out a method according to any of the preceding claims.

11. Computer program which causes a computing unit (150) according to Claim 10 to carry out a method according to any of Claims 1 to 9 when it is executed on the computing unit (150).

12. Machine-readable storage medium with a computer program according to Claim 11 stored on it.

## Revendications

1. Procédé de fonctionnement d'un système d'actionnement hydraulique (100), qui présente un consommateur hydraulique (130) avec un piston (134) posi-tionnable dans un cylindre (132), qui est relié à un raccord (A) par l'intermédiaire d'une pompe à vitesse variable (110) et à un réservoir (120) par un autre raccord (B), par l'intermédiaire d'une vanne proportionnelle (140),
une position (x) du piston (134) étant régulée en utilisant une régulation basée sur un modèle, dans laquelle une vitesse de rotation (n) de la pompe (110) est utilisée comme grandeur de réglage et dans laquelle une position (y) de la vanne proportionnelle (140) est prédéfinie,
un modèle de trajet inverse (200) du système d'actionnement hydraulique (100) étant utilisé pour régler une valeur de consigne pour une force sur le piston en utilisant la vanne proportionnelle (140), et
**caractérisé en ce que**
pour atteindre la valeur de consigne pour la force sur le piston (134), une courbe de consigne de la position de la vanne proportionnelle (140) est établie par une planification des pressions de consigne dans le système d'actionnement hydraulique (100) et des positions résultantes (y) de la vanne proportionnelle (140).

2. Procédé selon la revendication 1, dans lequel le modèle de parcours inverse (200) du système d'actionnement hydraulique (100) est utilisé pour, en utilisant la vanne proportionnelle (140), régler la valeur de consigne pour la force sur le piston.

3. Procédé selon l'une des revendications précédentes, dans lequel il est réalisé un contrôle préalable lors de la prédétermination, notamment dans le cadre d'une régulation subordonnée, de la position (y) de la vanne proportionnelle (140).

4. Procédé selon la revendication 3, dans lequel il est pris en compte, dans le contrôle préalable pour la vanne proportionnelle (140), une valeur de consigne de pression basée sur un modèle, en tant qu'entrée et/ou une dynamique de la vanne proportionnelle.

5. Procédé selon l'une des revendications précédentes, dans lequel un contrôle préalable est effectué lors de la régulation de la position (x) du piston (134).

6. Procédé selon la revendication 5, dans lequel il est tenu compte, dans le contrôle préalable de la position (x) du piston (134), d'une relation entre un débit du vérin et une variable d'état caractérisant le mouvement du piston, notamment une dérivée temporelle de la position.

7. Procédé selon l'une des revendications précédentes, dans lequel, dans le cadre d'une surveillance au moyen d'un modèle du système d'actionnement hydraulique (100), certaines valeurs de grandeurs sont comparées à des valeurs de mesure correspondantes.

8. Procédé selon l'une des revendications précédentes, dans lequel il est utilisé, en tant que pompe à vitesse variable (110), une pompe à débit constant ou une pompe à cylindrée variable.

9. Procédé selon l'une des revendications précédentes, dans lequel le système d'actionnement hydraulique (100) est utilisé pour un axe électrohydraulique.

10. Unité de calcul (150) adaptée pour mettre en œuvre un procédé selon l'une des revendications précédentes.

11. Programme d'ordinateur amenant une unité de calcul (150) selon la revendication 10 à mettre en œuvre un procédé selon l'une des revendications 1 à 9 lorsqu'il est exécuté sur l'unité de calcul (150).

12. Support de stockage lisible par une machine sur lequel est stocké un programme d'ordinateur selon la revendication 11.
